# EUROPEAN PATENT SPECIFICATION

(11) **EP 2 404 491 B1**
(45) Date of publication and mention of the grant of the patent: **21.11.2018**
(21) Application number: 09841120.0
(22) Date of filing: 06.03.2009
(51) Int. Cl.: A01B 33/10

(54) **TILLAGE TINE AND ROTOR EQUIPPED WITH SAID TINE**
KULTIVATORZINKE UND ROTOR AUSGESTATTET MIT EINER DERARTIGEN KULTIVATORZINKE
DENT ARATOIRE ET ROTOR ÉQUIPÉ D'UNE TELLE DENT

(43) Date of publication of application: 11.01.2012
(73) Proprietor: Yanmar Co., Ltd., Osaka-shi, Osaka 530-0013 (JP)
(72) Inventor: ARAI, Hiroyuki, Osaka-shi Osaka 530-8311 (JP); HAYATA, Hiromitsu, Osaka-shi Osaka 530-8311 (JP); YAMASAKI, Eiji, Osaka-shi Osaka 530-8311 (JP)
(74) Representative: Jostarndt Patentanwalts-AG
(86) International application number: PCT/JP2009/054308
(87) International publication number: WO 2010/100758

(56) References cited:
- EP-A2- 0 224 371
- CH-A- 204 774
- GB-A- 955 955
- JP-A- 62 278 902
- JP-A- 63 012 202
- JP-A- 2002 125 404
- JP-A- 2006 109 787

## Description

The present invention relates to construction of a tillage tine attached to a tillage shaft of a walking farm management machine or the like and rotor equipped with the tillage tine.

### Background Art

Conventionally, there is a walking farm management machine which travels with a tillage tine provided on a rotational shaft of a rotary tillage machine while tilling with the tillage tine. Such a walking farm management machine is easy and is capable of a small turn, thereby spread generally widely.

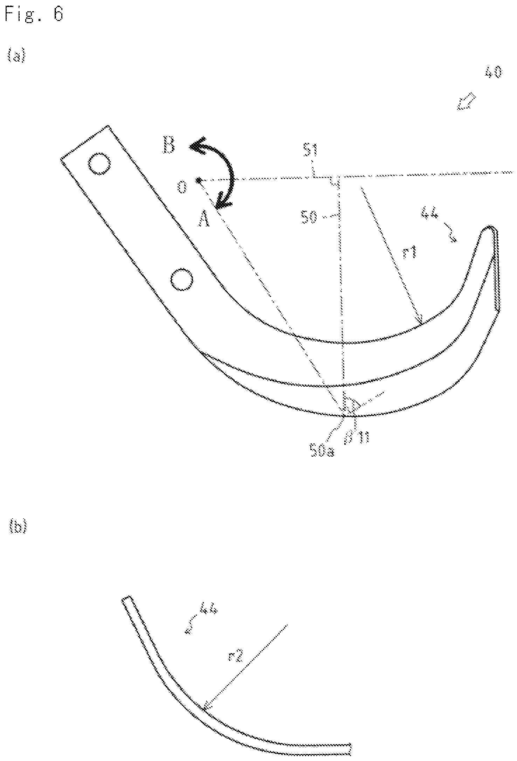

In the walking farm management machine, when soil requires only a normal tillage depth, tillage work is performed with a hatchet tine 40 shown in Fig. 6(a) (for example, see the Patent Literatures 1 to 3). When the soil requires a full tillage depth, the hatchet tine 40 is replaced with a tillage tine (deep tillage tine) for exclusive use and then deep tillage work is performed.

However, in the method mentioned above, it is necessary for the deep tillage work to prepare the tillage tine separately, thereby causing a load on an operator. Furthermore, a storage place for the tillage tine which is not used is required, and the farm management requires much labor.

Patent Literature 1: the Japanese Patent Laid Open Gazette Hei. 9-298903
Patent Literature 2: the Japanese Patent Laid Open Gazette 2002-125404
Patent Literature 3: the Japanese Patent Laid Open Gazette 2006-6284

### Disclosure of Invention

### Problems to Be Solved by the Invention

Therefore, the purpose of the present invention is to provide a tillage tine which can perform normal tillage work by rotation along one direction and perform deep tillage work by rotation along the other direction.

### Means for Solving the Problems

The above-mentioned problems are solved by the following means.

According to the present invention, a tillage tine includes a base portion attached to a tillage shaft, and a blade body extended from the base portion and curved oppositely to rotational direction of the tillage shaft. The blade body comprises a straight flat portion extended from the base portion on the same plane as the base portion, and a bending portion bent at a tip of the straight flat portion along the direction of the tillage shaft. A wedge-like edge portion whose top is an end surface opposite to the rotational direction of the tillage shaft is formed at a tip of the bending portion, and the bending portion is formed so that a virtual line, which passes through the axis of the tillage shaft and is perpendicular to a bending start line of the bending portion, crosses the bending portion.

According to the present invention, when the tillage tine is rotated oppositely to the rotational direction of the tillage shaft, angles respectively between the bending start line and tangent lines of the rotational loci at ends and of the bending start line are formed substantially not more than 45°.

According to the present invention, the edge portion is cut by a cutting line aslant about the lengthwise direction of the bending portion, and when viewed in side, the cutting line is formed so as to be substantially similar to a tangential line of a rotational locus of the top or so that an angle between the cutting line and the tangential line is acute.

According to the present invention, a tapered blade part is formed in which front and rear surfaces in the rotational direction are slanted.

According to the present invention, the left and right tillage shafts each of which is equipped with the tillage tine according to the present invention are enabled to be replaced with each other, and the tillage tines enter the soil with the edge portions so as to till the soil deeply.

### Effect of the Invention

The present invention constructed as the above brings the following effects.

According to the present invention, when the tillage tine is attached to the farm management machine of axle tillage type, the farm management machine can travel by rotating the edge portion in the normal attachment state in which the edge portion is attached toward the rear side in the rotational direction. At the traveling, when traveling resistance is generated by the resistance bar provided in the farm management machine, the tillage tine cuts and enters the soil with the straight flat portion of the blade body and reverses the soil with the bending portion of the blade body, whereby the tillage work is enabled. By the down cut rotation of the tillage tine in the state in which the edge portion is attached toward the front side in the rotational direction, that is, the edge portion is attached oppositely to the state mentioned above, the tillage tine can thrust the edge portion deeply into soil and enter the soil, whereby the deep tillage work is enabled.

According to the present invention, the bending portion is formed so that the virtual line, which passes through the axis of the tillage shaft and is perpendicular to the bending start line of the bending portion, crosses the bending portion, whereby the edge portion of the bending portion is directed to the rear side in the rotational direction of the tillage tine and the reversing ability of the soil can be secured. By the down cut rotation of the tillage tine attached oppositely, the tillage tine can thrust the edge portion deeply into soil and enter the soil, whereby the deep tillage work is enabled.

According to the present invention, when the tillage tine in the normal attachment state is rotated, the edge portion is directed along the direction of the tangential line, whereby the abrasion of the edge is reduced. When the tillage tine in the opposite attachment state is rotated, the sharp portion of the edge portion is thrust to the soil, whereby the cutting resistance is small and the tillage tine can enter the soil deeply.

According to the present invention, in either the case in which the tillage tine is in the normal attachment state or the case in which the tillage tine is in the opposite attachment state, the blade portion cuts the soil, whereby the tillage resistance can be reduced so as to reduce the driving energy. Accordingly, the work can be performed efficiently.

According to the present invention, by reversing laterally the tillage tines, the plurality of the tillage tines can be rotated while the rotational direction thereof is changed. Therefore, different tillage works can be performed with the one rotor. Furthermore, for changing the tillage work, it is not necessary to remove the tillage tines one by one and change their directions, whereby the change can be performed easily.

### Brief Description of Drawings

[Fig. 1] It is a side view of entire construction of a walking farm management machine 1.
[Fig. 2] It is a rear view of a tillage shaft.
[Fig. 3] It is a drawing showing shape of a tillage tine. (a) is a side view, (b) is a plan view, (c) is an arrow sectional view of the line C-C in Fig. 3 (b), and (d) is a rear view of an edge portion.
[Fig. 4] It is a side view of the tillage tine. (a) is a drawing showing the state of rotation along an arrow A, and (b) is a drawing showing the state of rotation along an arrow B.
[Fig. 5] It is a rear view showing the state in which left and right tillage shafts are replaced with each other.
[Fig. 6] It is a drawing showing shape of a conventional hatchet tine. (a) is a side view, and (b) is a rear view of a bending portion.

### The Best Mode for Carrying out the Invention

Next, explanation will be given on an embodiment of a walking farm management machine of axle tillage type equipped with a tillage tine of an embodiment according to the present invention.

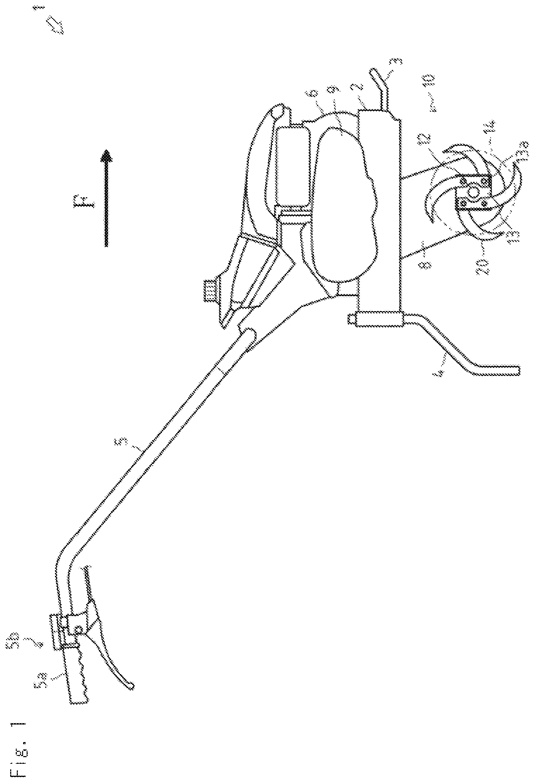

In below explanation, a direction of an arrow A in Fig. 1 is regarded as a front direction of a walking farm management machine 1, the direction opposite thereto is regarded as a rear direction, and left and right about the front direction are regarded as left and right directions.

Firstly, explanation will be given on the entire construction of the walking farm management machine 1.

As shown in Fig. 1, a bumper 3 protecting the vehicle body is fixed to a front portion of a body frame 2 of the walking farm management machine 1, and a resistance bar 4 generating traveling resistance is fixed to the rear portion of the body frame 2. A handle 5 is extended upward from the rear portion of the body frame 2, and a grasp part 5a is provided at the rear side of the handle 5. An operation part 5b including a main clutch lever, an accelerator lever and the like is provided near the grasp part 5a.

In the upper portion of the body frame 2, an engine 6 and a driving casing 9 are provided and arranged laterally. A transmission casing 8 is extended vertically about the body frame 2, and two axles 11 are projected leftward and rightward from both sides of the lower portion of the transmission casing 8. Two tillage shafts 12 of a rotor 10 are attached to the axles 11, and the rotor 10 is disposed in the lower portion of the body frame 2.

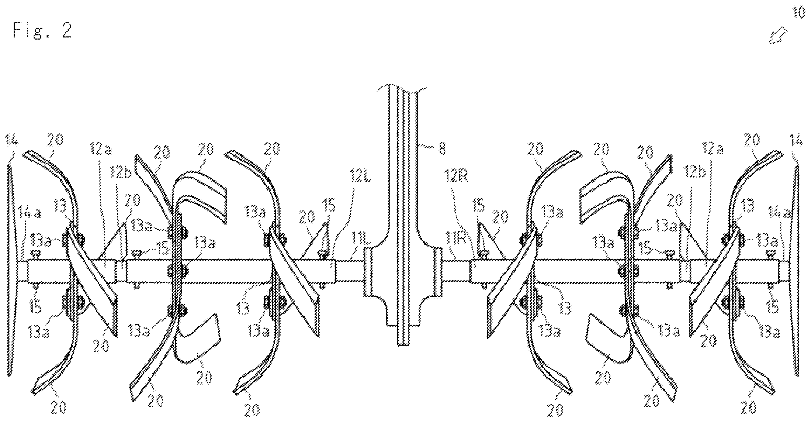

As shown in Fig. 2, the rotor 10 includes left and right tillage shafts 12L and 12R, left and right disks 14, and a plurality of tillage tines 20.

Each of the left and right tillage shafts 12 is formed pipe-like, and corresponding one of the axles 11 is inserted into one of the ends of the tillage shaft 12 and fixed by a fixing member such as a fixing pin 15. In this embodiment, pin holes are opened in the axle 11 and the tillage shaft 12 perpendicularly to the axial direction and then the fixing pin 15 is inserted into the pin holes so as to fix the axle 11 to the tillage shaft 12. An attachment shaft 12b of an extension tillage shaft 12a or an attachment shaft 14a of the disk 14 is inserted into the other end of the tillage shaft 12 and then fixed by the fixing pin 15 similarly to the above.

On the tillage shaft 12 and the extension tillage shaft 12a, one or a plurality of attachment plates (flanges) 13 are attached at predetermined intervals while the number of the attachment plate 13 is set corresponding to the length of the shaft. Namely, the extension tillage shaft 12a is connected in series to the tillage shaft 12 corresponding to the tillage width, the attachment plates 13 are fixed on the tillage shaft 12 (the extension tillage shaft 12a) corresponding to the lateral width of the tillage tine 20, and the disk 14 is fixed through the attachment shaft 14a to the tillage shaft 12 (the extension tillage shaft 12a) of the outermost. Each of the attachment plates 13 is fixed so as to be extended perpendicularly to the axis O of the tillage shaft 12. The extension tillage shaft 12a may be constructed to have the same length as the tillage shaft 12. It may alternatively be constructed that a pipe-like holder is projected radially from the tillage shaft 12 instead of the attachment plates 13 and the tillage tine 20 is attached to the holder.

The attachment shaft 14a is projected sideward from the center of the disk 14 and inserted into the tillage shaft 12 or the extension tillage shaft 12a of the outermost and then fixed by a fixing member such as the fixing pin 15.

In this construction, by pulling out the fixing pin 15 fixing the tillage shaft 12 to the axle 11, the tillage shaft 12 can be detached easily, whereby the rotor 10 can be replaced between the left and right sides.

The engine 6 is driven, and the power of the engine 6 is transmitted through the driving casing 9 to the transmission casing 8 and changed in speed in the transmission casing 8 and transmitted to the tillage shafts 12, whereby the tillage shafts 12, in its turn the tillage tines 20 are rotated. Accordingly, the walking farm management machine 1 travels while tilling the soil.

Next, explanation will be given on the tillage tines 20 which are an embodiment of the present invention in detail.

The rotational direction of the tillage tines 20 is prescribed as a direction of an arrow A, and the direction opposite to the rotational direction of the tillage tines 20 is prescribed as a direction of an arrow B.

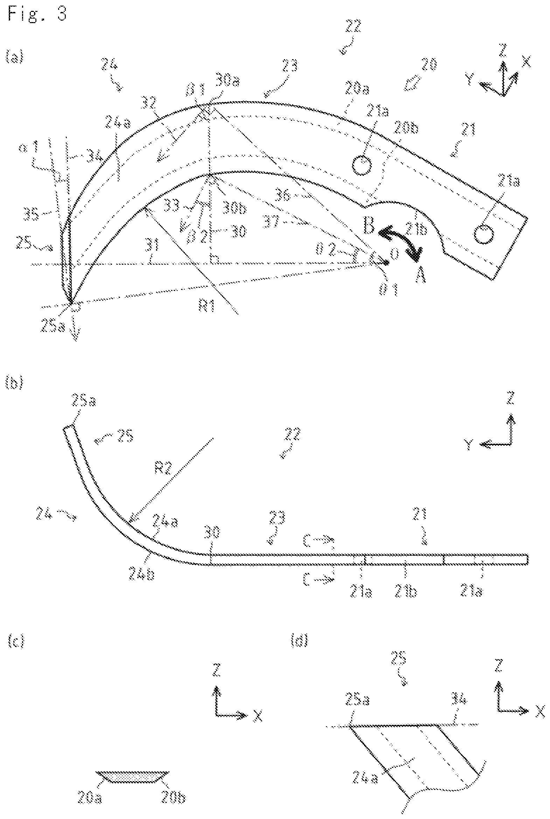

As shown in Fig. 3, each of the tillage tines 20 is constructed by a member shaped long and narrow and made from a metal material such as SUP6. The tillage tine 20 has a base portion 21 which is attached to the attachment plate 13 of the tillage shaft 12 and a blade body 22 which cuts into the soil and turn and throws the soil.

In each of the base portion 21 and the blade body 22 or the blade body 22 of the tillage tine 20, a tapered blade part is formed in which front and rear surfaces in the rotational direction are slanted. Namely, as shown in Fig. 3(c), the surface of the front side in the rotational direction of the tillage tine 20 (the front surface in the direction of the arrow A) is shaved aslant so as to form a blade portion 20a, and the surface of the rear side in the rotational direction (the rear surface in the direction of the arrow B) is shaved aslant so as to form a blade portion 20b. The blade portions 20a and 20b are formed in the same side, but may alternatively be formed in the opposite sides.

The base portion 21 is formed in the same plane as the attachment plate 13 of the tillage shaft 12 (perpendicular to the tillage shaft). In the base portion 21, two attachment holes 21a are bored with a suitable interval (corresponding to attachment holes in the attachment plate 13), and the base portion 21 is attached to the attachment plate 13 by bolt and nut 13a (see Fig. 1). A circular arc-like cut portion 21b is formed in the side of the base portion 21 close to the tillage shaft, whereby the base portion 21 can be fixed as close to the tillage shaft 12 as possible.

The base portion 21 in this embodiment is a flange type base portion fixed to the attachment plate 13 of the tillage shaft 12, but may alternatively be a base portion which is inserted into a holder and then fixed. In this case, the number of the attachment hole 21a is one.

The blade body 22 includes a straight flat portion 23 extended from the side of the base portion into the same plane as the base portion 21, a bending portion 24 bent at the tip of the straight flat portion 23, and an edge portion 25 formed at the tip of the bending portion 24.

As shown in Fig. 3(d), the edge portion 25 is formed by cutting the tip of the bending portion 24 aslant along a cutting line 34 about the lengthwise direction. The tip of the edge portion 25 is formed wedge-like while the end surface opposite to the rotational direction of the tillage shaft 12 (the end surface at the front in the direction of the arrow B) is a top 25a, and the top 25a positions at the most outer side at the time of rotation. As shown in Fig. 3(a), the cutting line 34 is formed substantially the same as a tangential line 35 at the top 25a of the edge portion 25 when viewed in side. Otherwise, an angle α1 between the cutting line 34 and the tangential line 35 is acute.

Accordingly, when the tillage tine 20 is rotated along the direction of the arrow B, the tillage tine 20 enters the soil through the top 25a, and the rotational direction of the top 25a (the direction of the tangential line 35) is substantially in agreement with the extending direction of the edge portion 25. Accordingly, the sharp portion of the edge portion 25 is thrust into the soil, whereby the resistance of the soil is small and the tillage tine 20 can enter the soil deeply.

The blade body 22 (the straight flat portion 23, the bending portion 24 and the edge portion 25) in the long and narrow flat plate-like state before bent is curved gradually from the tip of the base portion 21 oppositely to the rotational direction of the tillage shaft 12 (along the direction of the arrow B). As shown in Figs. 3(a) and 3(b), the bending portion 24 is bent gradually toward the tip along the direction of the tillage shaft at a bending start line 30. In this embodiment, the relation between the bending start line 30 and the tillage tine 20 is set as discussed below, whereby the resistance of the soil to the tillage tine 20 at the time of rotating along the direction of the arrow B is reduced so as to enable deep tillage work.

Namely, when viewed in side, the bending start line 30 is extended toward the center of the curve, and the bending portion 24 is bent so that a virtual line 31, which is perpendicular to the bending start line 30 and passes through the axis O of the tillage shaft 12, crosses the tip of the bending portion 24.

The bending start line 30 is a straight line arranged at the tip of the straight flat portion 23 and having a predetermined angle about the lengthwise direction of the straight flat portion 23.

The virtual line 31 crosses the bending start line 30 at right angles and is extended from the axis O of the tillage shaft 12 along the radial direction.

Next, explanation will be given on the relation between the virtual line 31 and the angles β1 and β2.

As shown in Fig. 3(a), when a triangle is formed by a segment 36 connecting the end 30a to the axis O, the bending start line 30 and the virtual line 31, it is clear that the angle β1 is an angle between the segment 36 and the virtual line 31. Similarly, when a triangle is formed by a segment 37 connecting the end 30b to the axis O, the bending start line 30 and the virtual line 31, it is clear that the angle β2 is an angle between the segment 37 and the virtual line 31.

In this case, when the angle β1, that is, the angle between the segment 36 and the virtual line 31 is small, the virtual line 31 crosses the bending portion 24. Similarly, when the angle β2, that is, the angle between the segment 37 and the virtual line 31 is small, the virtual line 31 crosses the bending portion 24.

When the angle β1, that is, the angle between the segment 36 and the virtual line 31 is large, the virtual line 31 is distant from the bending portion 24. Similarly, when the angle β2, that is, the angle between the segment 37 and the virtual line 31 is small, the virtual line 31 is distant from the bending portion 24.

In this embodiment, each of the angles β1 and β2 is substantially not more than 45°.

As shown in Fig. 3(a), the relation β1 > β2 exists. However, the relation of magnitude between the angles β1 and β2 is changed corresponding to the position and angle of the bending start line 30.

As mentioned above, when viewed in side, the bending start line 30 is extended toward the center of the curve, and the bending portion 24 is bent so that the virtual line 31, which is perpendicular to the bending start line 30 and passes through the axis O of the tillage shaft 12, crosses the tip of the bending portion 24, whereby the angles β1 and β2 are formed small. Accordingly, when the edge portion 25 is arranged oppositely to the rotational direction of the tillage shaft 12 (along the direction of the arrow B) and the tillage tine 20 is rotated oppositely to the rotational direction of the tillage shaft 12 (along the direction of the arrow B), the resistance of the soil is small and the tillage tine 20 enters the soil enough, whereby the deep tillage work is enabled.

As shown in Fig. 6(a), in a conventional hatchet tine 40, a bending start line 50 is extended toward the center of the curve, and a virtual line 51, which is perpendicular to the bending start line 50 and passes through the axis O of the tillage shaft 12 is distant from a tip of a bending portion 44.

The angle β1 in this embodiment is properly smaller than an angle β11 of the conventional hatchet tine 40.

While the curvature radius of the blade body 22 (curve) of the tillage tine 20 in the side view (Fig. 3a) is defined as R1, the curvature radius is formed slightly larger than the curvature radius r1 of the blade body 42 of the conventional hatchet tine 40 (R1 > r1). While the curvature radius of the bending portion 24 (bending) of the tillage tine 20 in the rear view (Fig. 3b) is defined as R2, the curvature radius R2 is formed slightly larger than the curvature radius r2 of the bending portion 44 of the conventional hatchet tine 40 (R2 > r2).

However, R1 and R2 are not limited thereto. The value of R1 affects the tillage resistance and the tillage depth when the tillage tine 20 is rotated oppositely to the rotational direction of the tillage shaft 12 (along the direction of the arrow B), and is controlled suitably corresponding to the substance of the work. The value of R1 affects slightly the position of entering of the tillage tine 20 when the tillage tine 20 is rotated oppositely to the rotational direction of the tillage shaft 12 (along the direction of the arrow B), and is controlled suitably corresponding to the reversing ability and tillage ability of the soil in the case that the tillage tine 20 is rotated along the rotational direction of the tillage shaft 12 (along the direction of the arrow A).

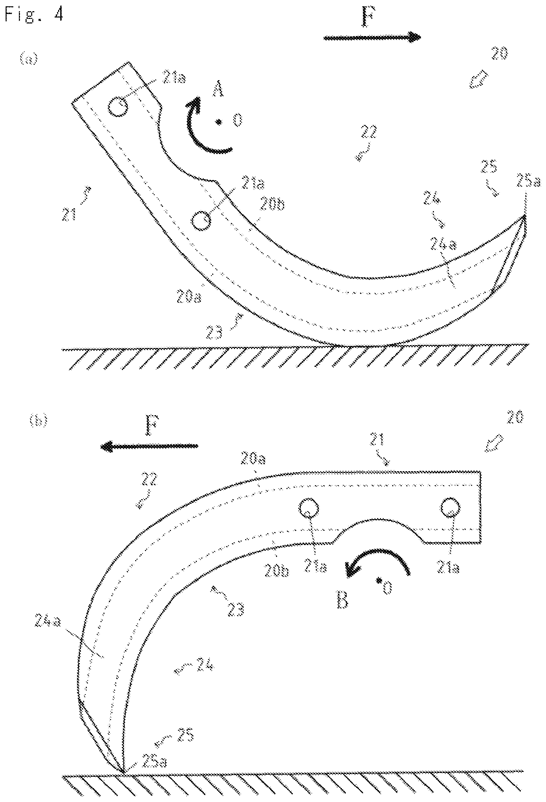

When such the tillage tine 20 is rotated along the rotational direction of the tillage shaft 12 (along the direction of the arrow A) as shown in Fig. 4(a), the straight flat portion 23 is the part of the tillage tine 20 which firstly touch the soil, and the blade body 22 gradually cuts into the soil. The soil cut by the straight flat portion 23 is reversed by the bending portion 24 and tilled. Accordingly, when the tillage tine 20 is rotated along the direction of the arrow A, the tillage tine 20 can be used similarly to the conventional hatchet tine 40 (see Fig. 6a) so as to perform the tillage work.

As shown in Fig. 4(b), when the tillage tine 20 is attached oppositely to the normal attachment direction, in other words, the tillage tine 20 is attached so as to arrange at the forward side in the rotational direction and the tillage tine 20 is rotated along the direction of the arrow B, the edge portion 25 firstly comes into contact with the soil. The edge portion 25 is formed wedge-like, whereby the resistance of the soil is small and the edge portion 25 can be thrust and cut into the soil. Furthermore, curved surfaces 24a and 24b of the bending portion 24 do not face the soil so that the resistance of the soil at the time of entering of the bending portion 24 is small, whereby the tillage tine 20 enters the soil more deeply than that rotated along the direction of the arrow A. Accordingly, when the tillage tine 20 is rotated along the direction of the arrow B, the deep tillage work is enabled.

As mentioned above, by switching the rotational direction of the tillage tine 20 between the direction of the arrow A and the direction of the arrow B, the tillage work and the deep tillage work can be performed.

Next, explanation will be given on means for changing the rotational direction of the tillage tine 20 (changing the work) without changing the rotational direction of the tillage shaft 12 (the axle 11).

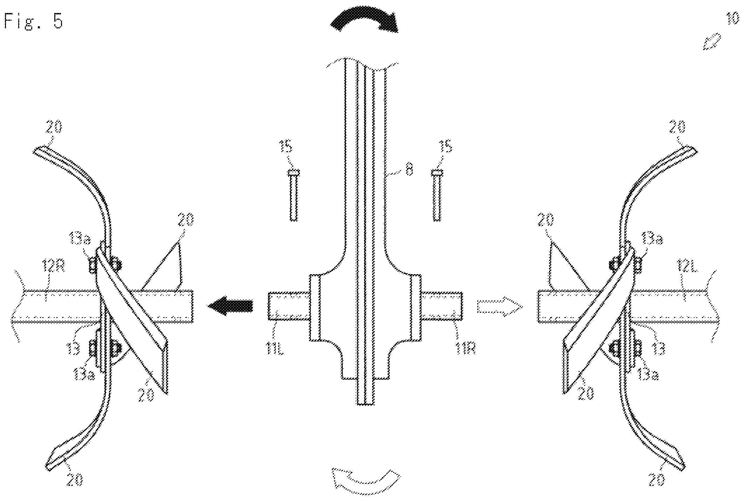

Firstly, as shown in Fig. 5, the fixing pin 15 inserted into the end of the left tillage shaft 12L (at the side of the transmission casing) is pulled out so as to remove the left tillage shaft 12L from the left axle 11L of the transmission casing 8. Similarly, the fixing pin 15 inserted into the end of the right tillage shaft 12R (at the side of the transmission casing) is pulled out so as to remove the right tillage shaft 12R from the right axle 11R of the transmission casing 8. The left tillage shaft 12L and the right tillage shaft 12R are moved along arrows and replaced with each other, and then the pinholes of the right tillage shaft 12R and the left axle 11L are in agreement with each other and the right tillage shaft 12R is fixed to the left axle 11L by the fixing pin 15. Similarly, the pinholes of the left tillage shaft 12L and the right axle 11R are in agreement with each other and the left tillage shaft 12L is fixed to the right axle 11R by the fixing pin 15. Namely, the left tillage shaft 12L and right tillage shaft 12R each of which is equipped with the tillage tine 20 are replaced with each other.

Accordingly, the tillage tines 20 which are rotated along the direction of the arrow A formerly are rotated along the direction of the arrow B. Otherwise, the tillage tines 20 which are rotated along the direction of the arrow B formerly are rotated along the direction of the arrow A. Namely, the rotational direction is changed by the replacement, whereby one of the works with the tillage tines 20 is replaced with the other work.

It may alternatively be constructed that each of the tillage tines 20 attached to the attachment plate 13 is reversed and replaced. In this case, the plurality of the tillage tines 20 must be replaced one by one and much labor is required. However, even if the tillage shafts cannot be the farm management machine as mentioned above, the rotational direction of the tillage tine can be switched, whereby the tillage tine 20 can be employed for various types of the farm management machine.

In the case of the farm management machine in which the tillage shaft 12 on which the tillage tine 20 is provided is separated from the axle for the travel of the farm management machine, that is, in the case that the rotor 10 is attached behind the traveling wheels, the construction mentioned above can be employed. In this case, the left and right rotaries 10 may be replaced with each other, or the rotor 10 may be rotated reversely.

As mentioned above, in the tillage tine 20 including the base portion 21 attached to the tillage shaft 12 and the blade body 22 extended from the base portion 21 and curved oppositely the rotational direction of the tillage shaft 12, while the blade body 22 includes the straight flat portion 23 extended from the base portion 21 on the same plane as the base portion 21 and the bending portion 24 bent along the direction of the tillage shaft at the tip of the straight flat portion 23, the wedge-like edge portion 25 whose top 25a is the end surface opposite to the rotational direction of the tillage shaft 12 is formed at the tip of the bending portion 24, and the bending portion 24 is formed so that the virtual line 31, which passes through the axis O of the tillage shaft 12 and is perpendicular to the bending start line 30 of the bending portion 24, crosses the bending portion 24. Accordingly, when the tillage tine 20 is attached to the farm management machine 1 of axle tillage type, the farm management machine 1 can travels by rotating the edge portion 25 in the normal attachment state in which the edge portion 25 is attached toward the rear side in the rotational direction. At the traveling, when traveling resistance is generated by the resistance bar 4 provided in the farm management machine 1, the tillage tine 20 cuts and enters the soil with the straight flat portion 23 of the blade body 22 and reverses the soil with the bending portion 24 of the blade body 22, whereby the tillage work is enabled. By the down cut rotation of the tillage tine 20 in the state in which the edge portion 25 is attached toward the front side in the rotational direction, that is, the edge portion 25 is attached oppositely to the state mentioned above, the tillage tine 20 can thrust the edge portion 25 deeply into soil and enter the soil, whereby the deep tillage work is enabled.

When the tillage tine 20 is rotated oppositely to the rotational direction of the tillage shaft 12, the angles respectively between the bending start line 30 and the tangent lines 32 and 33 of the rotational locus at the ends 30a and 30b of the bending start line 30 are formed substantially not more than 45°. Accordingly, the bending portion 24 is formed so that the virtual line 31, which passes through the axis O of the tillage shaft 12 and is perpendicular to the bending start line 30 of the bending portion 24, crosses the bending portion 24, whereby the edge portion 25 of the bending portion 24 is directed to the rear side in the rotational direction of the tillage tine 20 and the reversing ability of the soil can be secured. By the down cut rotation of the tillage tine 20 attached oppositely, the tillage tine 20 can thrust the edge portion 25 deeply into soil and enter the soil, whereby the deep tillage work is enabled.

The edge portion 25 is cut by the cutting line 34 aslant about the lengthwise direction of the bending portion 24, and when viewed in side, the cutting line 34 is formed so as to be substantially similar to the tangential line 35 of the rotational locus of the top 25a or so that the angle between the cutting line 34 and the tangential line 35 is acute. Accordingly, when the tillage tine 20 in the normal attachment state is rotated, the edge portion 25 is directed along the direction of the tangential line, whereby the abrasion of the edge is reduced. When the tillage tine in the opposite attachment state is rotated, the sharp portion of the edge portion 25 is thrust to the soil, whereby the cutting resistance is small and the tillage tine 20 can enter into the soil deeply.

The tapered blade part is formed in which the front and rear surfaces in the rotational direction are slanted. Accordingly, in both the case in which the tillage tine 20 is in the normal attachment state or the case in which the tillage tine 20 is in the opposite attachment state, the blade portion cuts the soil, whereby the tillage resistance can be reduced so as to reduce the driving energy. Accordingly, the work can be performed efficiently.

The left and right tillage shafts 12L and 12R each of which is equipped with the tillage tine 20 according to one of claims 1 to 4 are enabled to be replaced with each other, and the tillage tines 20 enter into the soil with the edge portions 25 so as to till the soil deeply. Accordingly, by reversing laterally the tillage shaft 12, the plurality of the tillage tines 20 can be rotated while the rotational direction thereof is changed. Therefore, different tillage works can be performed with the one rotor. Furthermore, form changing the tillage work, it is not necessary to remove the tillage tines 20 one by one and change their directions, whereby the change can be performed easily.

### Industrial Applicability

The present invention can be employed for a tillage tine of a rotor.

### Description of Notations

- 1: walking farm management machine
- 12: tillage shaft
- 12L: left tillage shaft
- 12R: right tillage shaft
- 20: tillage tine
- 21: base portion
- 22: blade body
- 23: straight flat portion
- 24: bending portion
- 25: edge portion
- 25a: top
- 30: bending start line
- 31: virtual line
- 34: cutting line

## Claims

1. A tillage tine (20) comprising:
a base portion (21) attached to a tillage shaft (12);
a blade body (22) extended from the base portion (21) and curved oppositely to rotational direction of the tillage shaft (12) so as to have a first curvature radius (R1) when the tillage tine (20) is viewed in the axial direction of the tillage shaft (12), wherein the blade body (22) comprises a straight flat portion (23) extended from the base portion (23) on the same plane with the base portion (23), and a bending portion (24) bent from a bending start line (30) at a tip of the straight flat portion (23) along the direction of the tillage shaft (12); and
a wedge-like edge portion (25) whose top (25a) is an end surface (24a) opposite to the rotational direction of the tillage shaft (12) is formed at a tip of the bending portion (24), and
**characterized in that** the bending portion (24) is gradually bent toward the tip of the bending portion (24) so as to have a second curvature radius (R2) when the tillage tine (20) is viewed in the radial direction of the tillage shaft (12), so that a virtual line (31), which passes through the axis of the tillage shaft (12) and is perpendicular to the bending start line (30), crosses the tip of the bending portion (24) when the tillage tine (20) is viewed in the axial direction of the tillage shaft (12).

2. The tillage tine (20) according to claim 1, wherein respective angles (β1, β2) between the bending start line (30) and respective tangent lines (32, 33) of the rotational loci at ends (30a, 30b) of the bending start line (30) are formed substantially not more than 45°.

3. The tillage tine (20) according to claim 1 or 2, wherein the edge portion (25) is formed by cutting off the bending portion (24) along a cutting line (34) aslant about the lengthwise direction of the bending portion (24), and when the tillage tine (20) is viewed in the axial direction of the tillage shaft (12), the cutting line (34) is formed so as to be substantially similar to a tangential line (35) of a rotational locus of the top (25a) of the edge portion (25) or so that an angle (α1) between the cutting line (34) and the tangential line (35) is acute.

4. The tillage tine (20) according to any one of claims 1 to 3, wherein the tillage tine (20) is formed with tapered blades (20a, 20b) at front and rear slant surfaces in the rotational direction.

5. A rotor (10) **characterized in that** the left and right tillage shafts (12L, 12R) each of which is equipped with the tillage tine (20) according to one of claims 1 to 4 are enabled to be exchanged for each other, whereby the tillage tines (20) enter a soil with the edge portions (25) so as to till the soil deeply.

## Patentansprüche

1. Kultivatorzinke (20), aufweisend:
einen Basisabschnitt (21), der an einer Kultivatorwelle (12) befestigt ist;
einen Schneidenkörper (22), der sich von dem Basisabschnitt (21) erstreckt und entgegen einer Drehrichtung der Kultivatorwelle (12) gekrümmt ist, so dass er einen ersten Krümmungsradius (R1) hat, wenn die Kultivatorzinke (20) in der Axialrichtung der Kultivatorwelle (12) betrachtet wird, wobei der Schneidenkörper (22) einen geraden flachen Abschnitt (23) aufweist, der sich von dem Basisabschnitt (23) auf der gleichen Ebene wie der Basisabschnitt (23) erstreckt, und einen Biegeabschnitt (24), der von einer Biegestartlinie (30) an einer Spitze des geraden flachen Abschnitts (23) entlang der Richtung der Kultivatorwelle (12) gebogen ist; und
einen keilförmigen Kantenabschnitt (25), dessen Oberseite (25a) eine Endfläche (24a) entgegen der Drehrichtung der Kultivatorwelle (12) ist, die an einer Spitze des Biegeabschnitts (24) ausgebildet ist, und
**dadurch gekennzeichnet, dass** der Biegeabschnitt (24) schrittweise hin zu der Spitze des Biegeabschnitts (24) gebogen ist, so dass er einen zweiten Krümmungsradius (R2) hat, wenn die Kultivatorzinke (20) in der Radialrichtung der Kultivatorwelle (12) betrachtet wird, so dass eine gedachte Linie (31), die durch die Achse der Kultivatorwelle (12) verläuft und senkrecht zu der Biegestartlinie (30) ist, die Spitze des Biegeabschnitts (24) kreuzt, wenn die Kultivatorzinke (20) in Axialrichtung der Kultivatorwelle (12) betrachtet wird.

2. Kultivatorzinke (20) nach Anspruch 1, wobei jeweilige Winkel (β1, β2) zwischen der Biegestartlinie (30) und jeweiligen Tangentenlinien (32, 33) der Drehorte an Enden (30a, 30b) der Biegestartlinie (30) im Wesentlichen nicht mehr als 45 ° umgeformt sind.

3. Kultivatorzinke (20) nach Anspruch 1 oder 2, wobei der Kantenabschnitt (25) durch Abtrennen des Biegeabschnitts (24) entlang einer Schnittlinie (34) schräg über die Längsrichtung des Biegeabschnitts (24) gebildet wird, und wenn die Kultivatorzinke (20) in der Axialrichtung der Kultivatorzinke (12) betrachtet wird, die Schnittlinie (34) so ausgebildet ist, dass sie einer Tangentiallinie (35) eines Drehorts der Oberseite (25a) des Kantenabschnitts (25) im Wesentlichen ähnlich ist, oder so dass ein Winkel (α1) zwischen der Schnittlinie (34) und der Tangentiallinie (35) spitz ist.

4. Kultivatorzinke (20) nach einem der Ansprüche 1 bis 3, wobei die Kultivatorzinke (20) mit verjüngten Schneiden (20a, 20b) an vorderen und hinteren Schrägflächen in der Drehrichtung ausgebildet ist.

5. Rotor (10), **dadurch gekennzeichnet, dass** die linken und rechten Kultivatorwellen (12L, 12R), die jeweils mit der Kultivatorzinke (20) nach einem der Ansprüche 1 bis 4 ausgerüstet sind, gegeneinander ausgetauscht werden können, wodurch die Kultivatorzinken (20) in einen Boden mit den Kantenabschnitten (25) gelangen, so dass sie den Boden tief durchpflügen.

## Revendications

1. Dent pour travail du sol (20), comprenant :
une portion de base (21) attachée sur un arbre pour travail du sol (12) ;
un corps de lame (22) s'étendant à partir de la portion de base (21) et courbé opposée à la direction de rotation de l'arbre pour travail du sol (12) de manière à présenter un premier rayon de courbure (R1) lorsque la dent pour travail du sol (20) est regardée dans la direction axiale de l'arbre pour travail du sol (12), dans lequel le corps de lame (22) comprend une portion plate droite (23) s'étendant à partir de la portion de base (23) sur le même plan avec la portion de base (23), et une portion de cintrage (24) cintrée à partir d'une ligne de début de cintrage (30) sur un bout de la portion plate droite (23) le long de la direction de l'arbre pour travail du sol (12), et
une portion de bord semblable à une cale (25), dont le haut (25a) est une surface d'extrémité (24a) opposée à la direction de rotation de l'arbre pour travail du sol (12), est formée sur un bout de la portion de cintrage (24), et **caractérisée en ce que** la portion de cintrage (24) est graduellement cintrée vers le bout de la portion de cintrage (24) de manière à présenter un second rayon de courbure (R2) lorsque la dent pour travail du sol (20) est regardée dans la direction radiale de l'arbre pour travail du sol (12), de sorte qu'une ligne virtuelle (31) laquelle passe par l'axe de l'arbre pour travail du sol (12) et est perpendiculaire par rapport à la ligne de début de cintrage (30), traverse le bout de la portion de cintrage (24) lorsque la dent pour travail du sol (20) est regardée dans la direction axiale de l'arbre pour travail du sol (12).

2. Dent pour travail du sol (20) selon la revendication 1, dans laquelle des angles respectifs (β1, β2) entre la ligne de début de cintrage (30) et des lignes de tangente respectives (32, 33) de lieux de rotation sur des extrémités (30a, 30b) de la ligne de début de cintrage (30) sont formés de manière à ne pas dépasser en grande partie 45 °.

3. Dent pour travail du sol (20) selon la revendication 1 ou 2, dans laquelle la portion de bord (25) est formée en découpant la portion de cintrage (24) le long d'une ligne de coupe (34) de manière oblique autour de la direction de longueur de la portion de cintrage (24), et lorsque la dent pour travail du sol (20) est regardée dans la direction axiale de l'arbre pour travail du sol (12), la ligne de coupe (34) est formée de manière à être similaire en grande partie à une ligne tangentielle (35) d'un lieu de rotation du dessus (25a) de la portion de bord (25), ou de sorte qu'un angle (α1) entre la ligne de coupe (34) et la ligne tangentielle (35) soit aigu.

4. Dent pour travail du sol (20) selon l'une quelconque des revendications 1 à 3, dans laquelle la dent pour travail du sol (20) est formée avec des lames présentant un amincissement progressif (20a, 20b) sur les surfaces obliques avant et arrière dans la direction de rotation.

5. Rotor (10) **caractérisé en ce que** les arbres (12L, 12R) gauche et droit pour travail du sol, chacun équipé de la dent pour travail du sol (20) selon l'une quelconque des revendications 1 à 4, sont en mesure d'être échangés entre eux, à cause duquel les dents pour travail du sol (20) pénètrent dans un sol avec des portions de bord (25) de manière à labourer le sol en profondeur.
